# EUROPEAN PATENT APPLICATION

(11) **EP 0 828 359 A2**
(43) Date of publication of application: **11.03.1998**
(21) Application number: 97115625.2
(22) Date of filing: 09.09.1997
(51) Int. Cl.: H04B 10/158

(54) **Receiver for optical burst signal and receiving method therefor**

(30) Priority: 10.09.1996 JP 239453/96
(71) Applicant: NEC CORPORATION, Tokyo (JP)
(72) Inventor: Kanai, Tatsuo, Minato-ku, Tokyo (JP)
(74) Representative: Baronetzky, Klaus, Dipl.-Ing.

(57) **Abstract**

There is disclosed an optical receiver and an optical receiving method for receiving optical burst signals. The optical receiver comprises a light receiving element, an automatic threshold level control circuit for identifying an electrical signal output from the light receiving element and outputting an identification signal, a limiter circuit for outputting the identification signal as a digital signal, and offset optical signal generator means for generating an offset optical signal based on the reset signal input into the automatic threshold level control circuit and inputting it into the light receiving element. The optical receiving method inputs a reset signal between optical burst signals, and inputs an offset signal between the optical burst signals after the reset signal. According to the present invention, the sensitivity is not deteriorated because a noise signal is not output in no signal state between the burst optical signals, and the duty ratio does not vary regardless of the light receiving level.

## Description

### BACKGROUND OF THE INVENTION

The present invention relates to an optical receiver and an optical receiving method, and, more particularly, to an optical receiver for receiving optical burst signals and a receiving method for it.

Conventional optical receivers for receiving optical burst signals include a device using an automatic threshold level control circuit ( hereinafter called the "ATC circuit"). The optical receiver converts optical burst signals into electric current at its optical receiver element. The signal current is amplified, identified by the ATC circuit, and converted into digital signals by a limiter circuit (or, a limiter amplifier).

An ATC circuit used for the above is disclosed, for example, in Japanese Patent Application Laid-Open No. 2-266630 (U.S. Patent No. 5,025,456). The ATC circuit sets a capacitor of a peak detector in it to an initial potential when an interval between optical burst signals is shorter than a leak time constant of the peak detector, so that subsequent optical burst signals can be surely received. For example, optical burst signal can be surely received by entering a reset signal to initialize the ATC circuit.

The conventional optical receiver is known to be of a system not offsetting the threshold level of the ATC circuit (a circuit system setting the threshold value to zero) and a system offsetting the threshold level (a circuit system setting the threshold value to non-zero). However, both systems have the following problems.

In the case of the system not offsetting threshold level of the ATC circuit, that is, setting the threshold level to zero in the reset operation, the system becomes a 1/0 uncertain state (a state where 1 or 0 is not determined) until the next optical burst signal. This state may erroneously establish synchronization. In addition, since even slight noise generated by the ATC circuit or the like exceeds the threshold level, a limiter output outputs a noise signal even if there is no signal after a reset signal is input. This noise may cause erroneous operation of a circuit in the following stage.

On the other hand, in the case of the system offsetting the threshold level of the ATC circuit, that is, setting the threshold level to non-zero in the reset operation, a duty ratio varies for the output waveform of the ATC circuit near the minimum light receiving level, so that penalty is imposed on the sensitivity.

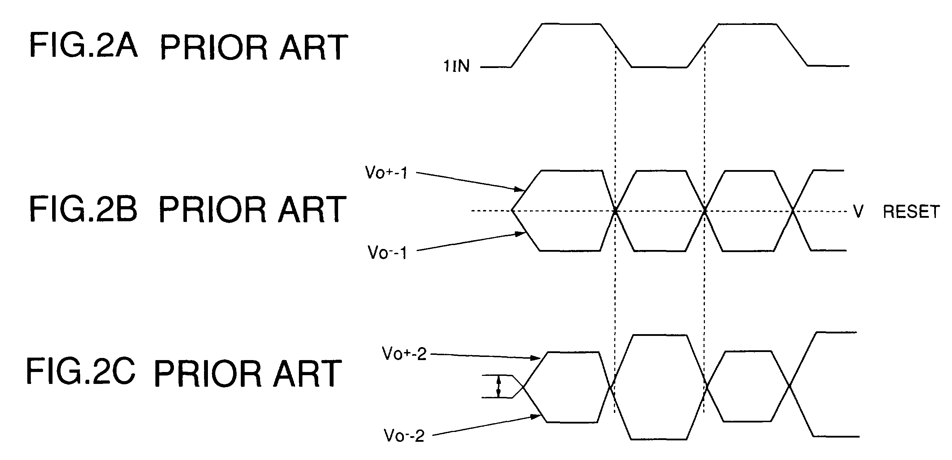

That is, when an input signal waveform as shown in FIG. 2A is output from the ATC circuit, the duty ratio does not vary for the system without offset as shown in FIG. 2B, but it would vary for the system with offset as shown in FIG. 2C.

### SUMMARY OF THE INVENTION

The present invention is intended to eliminate such problems, and to provide an optical receiver and an optical receiving method that do not offset the threshold level of the ATC circuit, thereby not deteriorating the minimum light receiving sensitivity and not outputting a noise signal when there is no signal.

According to the present invention, an optical receiver for receiving optical burst signals comprises an optical signal receiving section, an ATC circuit for identifying an electric signal output from the optical signal receiving section, a limiter circuit for outputting output of the ATC circuit as a digital signal, and offset optical signal generator means. The offset optical signal generator means comprises a control circuit for receiving a reset signal as input and outputting an offset signal, a circuit for driving a light emitting element with the offset signal, and the light emitting element for generating an offset optical signal. In addition, the automatic threshold level control circuit has an amplifier that does not offset the threshold level.

The method for receiving optical burst signals according to the present invention first inputs a reset signal between optical burst signals, and inputs an offset signal immediately after the reset signal. The offset signal is entered as an optical signal into the optical signal receiving section of the optical receiver, and the reset signal is input as an electric signal to the ATC circuit that identifies an electric signal converted from an optical burst signal. An offset optical signal pulse is generated with the falling edge of the reset signal as a trigger. Its level is set lower than the minimum light receiving level of the incident optical signal.

According to such device and method of the present invention, it becomes possible to receive optical burst signals without deteriorating the minimum light receiving sensitivity, and without outputting a noise signal in the no-signal state.

### BRIEF DESCRIPTION OF THE DRAWINGS

The above and other objects, features and advantages of the present invention will become apparent from the following detailed description when taken with the accompanying drawing in which:
FIG. 1 is a block diagram of a conventional optical receiver for receiving optical burst signals;
FIG. 2A is a waveform of input signal to an ATC circuit, FIG. 2B is a waveform of output signal of the ATC circuit without offset, and FIG. 2C is a waveform of output signal of the ATC circuit with offset;
FIG. 3 is a block diagram showing a configuration of an optical receiver according to the present invention;
FIG. 4 is a block diagram showing a configuration of an automatic threshold level control circuit used for the optical receiver according to the present invention;
FIGS. 5A to 5E are signal waveforms showing the optical receiving method according to the present invention; and
FIGS. 6A to 6C are signal waveforms illustrating the operation of the ATC circuit.

### DETAILED DESCRIPTION OF THE PREFERRED EMBODIMENTS

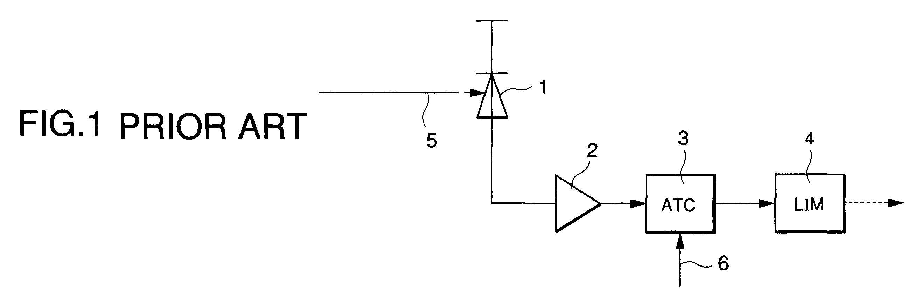

First, a conventional optical receiver is briefly described with reference to the drawing. Referring to FIG. 1, a burst optical signal 5 is input into a light receiving element 1, and converted into electric current. The signal current is amplified by a preamplifier 2, identified by an ATC circuit 3, and converted into a digital signal by a limiter circuit 4. When an interval between the burst optical signals 5 is shorter than a leak time constant of a peak detector of the ATC circuit 3, a reset signal 6 is input into the ATC circuit 3 to initialize it. However, the conventional optical receiver outputs a noise signal in no signal state when the threshold level of the ATC circuit is not offset, or deteriorates sensitivity when the threshold level of the ATC circuit is offset.

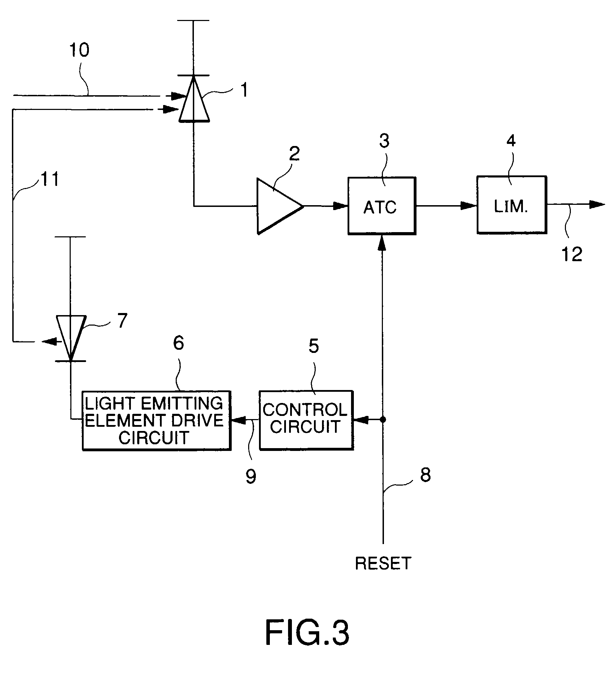

FIG. 3 shows a configuration of an optical receiver according to the present invention. The optical receiver comprises a light receiving element 1 for being input with an optical burst signal 10 transmitted over fiber optics or the like, and a preamplifier 2 for amplifying an electric signal converted by the light receiving element 1, as well as comprises an ATC circuit 3 for identifying the amplified electric signal, and being input with a reset signal, and a limiter circuit 4 for receiving an output signal of the ATC circuit 3 and outputting a digital signal 12. The optical receiver further comprises offset optical signal generator means. In the example of FIG. 3, the offset optical signal generator means comprises a control circuit 5 for being input with a reset signal 8, a light emitting element drive circuit 6 for connecting the control circuit 5 and driving a light emitting element 7, and the light emitting element 7 for inputting offset light into the light receiving element 1.

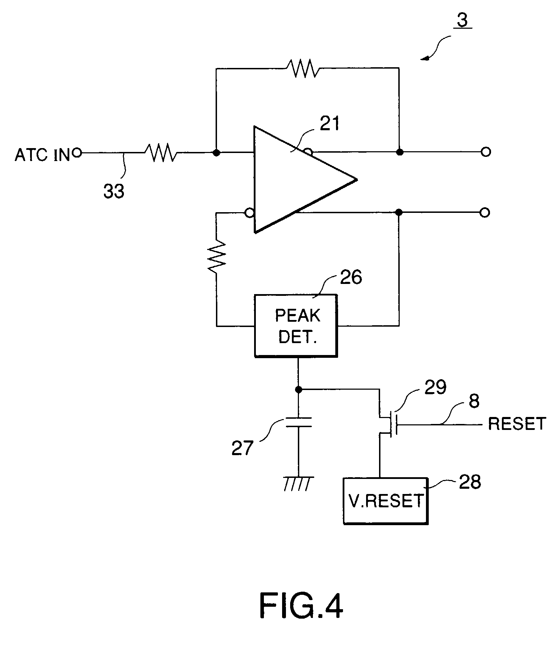

FIG. 4 shows an embodiment of the ATC circuit 3. A peak detector (PEAKDET.) 26 connects an amplifier 21 to which a signal is input, and from which signals of forward and reverse phases are output. The peak detector 26 connects a capacitor 27 the other end of which is grounded, and a transistor 29 that connects a reference potential (V.RESET) 28, and to the base of which the reset signal 8 is input. The amplifier 21 used is a one without offset for the threshold level.

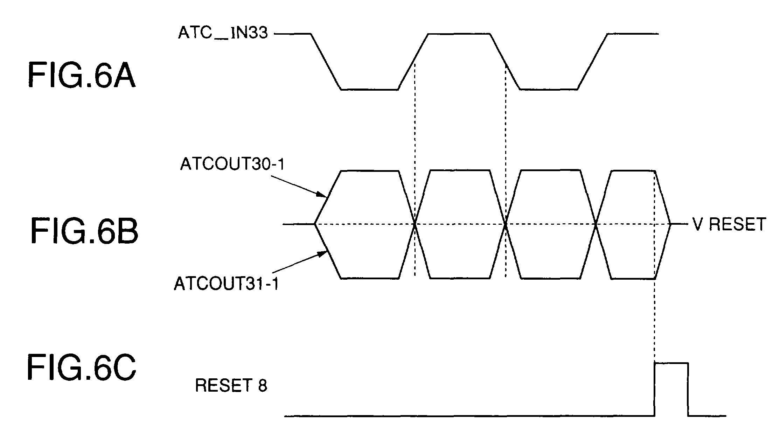

The optical receiver of FIG. 3 and the ATC circuit 3 of FIG. 4 operate as follows. When the optical burst signal 10 inputs in the light receiving element 1, the light receiving element 1 converts the optical burst signal into an electric signal. The electric signal is amplified by the preamplifier 2. The amplified electric signal is identified by the automatic threshold level control (ATC) circuit 3, and output as a digital signal 12 from the limiter circuit 4. In the ATC circuit 3, when a signal as shown in FIG. 6A is input into an input terminal 33, an output waveform of the amplifier 21 becomes that as shown in FIG. 6B by the operation of the peak detector 26. Since the amplifier 21 used is a one without offset of the threshold level, there is no variation in the duty ratio regardless of the light receiving level. When the reset signal 8 (FIG. 6C) is input in the ATC circuit 3, the transistor 29 is turned on, and the potential of the capacitor 27 becomes equal to the reference potential 28. Balance signals 30 and 31 (FIG. 6B) identified and output by the ATC circuit 3 is converted into a digital signal by the limiter circuit 4.

The reset signal 8 is also input into the control circuit 5 in addition to the ATC circuit 3. The control circuit 5 outputs the offset signal 9 with a predetermined width with the falling edge of the reset signal 8 as a trigger. The light emitting element drive circuit 6 drives the light emitting element 7 with the offset signal 9, and outputs an offset optical signal. The offset optical signal is input into the light receiving element 1 of the optical receiver. The light receiving level of the offset optical signal is desirably established to be lower than the minimum light receiving level of the optical input signal 10.

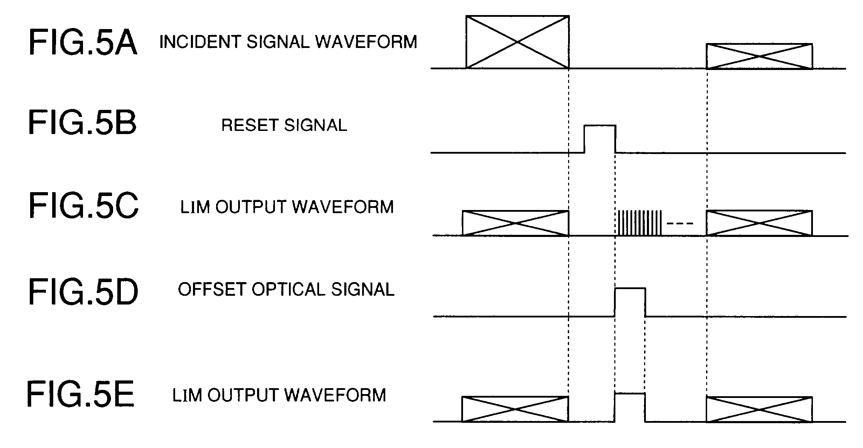

Now, the optical receiving method according to the present invention is described by referring to FIGS. 5A to 5E. In this example, a case is described where an optical burst signal with low light receiving level is entered following an optical burst signal with high light receiving level as shown in FIG. 3A. As shown in FIG. 5B, the reset signal 6 is generated between the burst optical signals to surely receive the optical burst signal with low light receiving level. Since the optical receiving method of the present invention is applied to the ATC circuit without offset, when the reset signal 6 is released, noise begins to be output on the output waveform of the limiter circuit (LIM.) 4, as shown in FIG. 5C. In this case, to reduce the noise to a level as low as possible, the control circuit 5 outputs the offset signal 9 with the falling edge of the reset signal 6 as a trigger. The offset optical signal 11 is entered into the light receiving element 1 for a specified period of time based on the offset signal 9. Thus, the optical burst signal is identified in a state where the offset signal is input between the optical burst signals. While the offset optical signal 11 is being entered into the light receiving element 1, an output waveform 12 of the limiter circuit 4 becomes H-level under an operation similar to the input of the optical burst signal 10. At the moment, the level of the offset optical signal 11 is set to be lower than the minimum light receiving level of the incident optical signal.

When input of the offset optical signal 11 completes, the limiter circuit 4 continues to output L-level until the next optical burst signal 10 is entered. Since the level of the offset optical signal 11 is held by a capacitor 27 of the peak detector 26 in the ATC circuit 3, the limiter circuit 4 outputs zero (L-level). Generally, since a time constant of an offset cancel circuit (the time constant of the capacitor 27) is larger than the pulse width of the offset optical signal 11, the duration when L-level is output is longer than the pulse width. Consequently, a 1/0 uncertain state is avoided after completion of the reset signal 8, and there is no possibility that minute noise is output from the limiter circuit 4.

If the light receiving level of an optical burst signal 10 subsequently input is higher than the level of the offset optical signal 11, a signal free from deterioration of the duty ratio is output without affected by the offset optical signal.

In the above example, timing when the reset signal is input into the ATC circuit after the first optical burst signal may be determined by taking into account time to the next optical burst signal, difference between light receiving levels, and the like. The offset optical signal 11 can be adjusted for its incident duration. In addition, the offset optical signal 11 can be masked by a circuit in the following stage.

Usually, an interval between optical burst signals is, for example, about 8 to 16 bits, and width of reset and offset signals is adjusted to be about several bits.

The present invention uses the ATC circuit not offsetting its threshold level, and inputs an offset optical signal at a level lower than the minimum light receiving level to the light receiving element with a reset signal as a trigger, so that the potential of the offset optical signal is held by the peak detector of the ATC circuit to vary the threshold level. Thus, the sensitivity is not deteriorated because a noise signal is not output in no signal state between the burst optical signals, and the duty ratio does not vary regardless of the light receiving level.

While the present invention has been described in connection with certain preferred embodiments, it is to be understood that the subject matter encompassed by the present invention is not limited to those specific embodiments. On the contrary, it is intended to include all alternatives, modifications, and equivalents as can be included within the spirit and scope of the following claims.

## Claims

1. An optical receiver for receiving optical burst signals comprising an optical signal receiving section, an automatic threshold level control circuit for identifying an electric signal output from said optical signal receiving section and outputting an identification signal, and offset optical signal generator means for generating an offset optical signal based on a reset signal input into said automatic threshold level control circuit, and inputting said offset optical signal into said optical signal receiving section.

2. The optical receiver as set forth in claim 1 further comprising an amplifier for amplifying an electric signal output by said optical signal receiving section.

3. The optical receiver as set forth in claim 1 further comprising a limiter circuit for receiving said identification signal and outputting a digital signal.

4. The optical receiver as set forth in claim 1, wherein said automatic threshold level control circuit has an amplifier not offsetting the threshold level.

5. The optical receiver as set forth in claim 1, wherein said offset optical signal generator means comprises a drive circuit for driving a light emitting element with said reset signal, and the light emitting element for generating an offset optical signal with the drive signal output by said drive circuit.

6. The optical receiver as set forth in claim 5, wherein said offset optical signal generator means further comprises a control circuit for outputting an offset signal in response to the reset signal.

7. The optical receiver as set forth in claim 4, wherein said amplifier connects to a peak detector provided with a capacitor the other end of which is grounded, said peak detector being connected with a transistor that is connected to a reference potential source and to the base of which the reset signal is input.

8. An optical receiving method for receiving optical burst signals comprising the steps of generating a reset signal between optical burst signals, and inputting an offset signal between said optical burst signals after generation of said reset signal.

9. The optical receiving method as set forth in claim 8, wherein said offset signal is input into an optical signal receiving section of an optical receiver as an optical signal.

10. The optical receiving method as set forth in claim 8, wherein said reset signal is input into an automatic threshold level control circuit of the optical receiver as an electrical signal.

11. The optical receiving method as set forth in claim 8, wherein an offset optical signal pulse is generated with a falling edge of the reset signal as a trigger.

12. The optical receiving method as set forth in claim 8, wherein the level of the offset optical signal is established to be lower than the minimum light receiving level of an incident optical signal.

13. The optical receiving method as set forth in claim 8, wherein said offset signal is masked after said burst signal is identified.
